# FASCICULE DE BREVET EUROPEEN

(11) **EP 4 530 589 B1**
(45) Date de publication et mention de la délivrance du brevet: **12.11.2025**
(21) Numéro de dépôt: 24200736.7
(22) Date de dépôt: 17.09.2024
(51) Int. Cl.: G01K 1/14, G01K 1/16, G01K 11/32, G01K 13/02, G01K 13/024

(54) **DISPOSITIF DE MESURE DE TEMPERATURE A FIBRE OPTIQUE ISOLEE D'UNE PAROI DE FIXATION PAR UNE PIECE COMPRENANT DU LIEGE**
TEMPERATURMESSVORRICHTUNG MIT EINER DURCH EIN KORKHALTIGES TEIL ISOLIERTEN OPTISCHEN FASER
TEMPERATURE MEASURING DEVICE WITH OPTICAL FIBRE ISOLATED FROM A FIXING WALL BY A PART COMPRISING CORK

(30) Priorité: 27.09.2023 FR 2310265
(43) Date de publication de la demande: 02.04.2025
(73) Titulaire: AIRBUS OPERATIONS (S.A.S.), 31060 Toulouse (FR)
(72) Inventeur: MENNEBEUF, Laetitia, 31060 Toulouse Cedex 9 (FR); COMBIER, Jean-Christophe, 31060 Toulouse Cedex 9 (FR); DERGICI, Serife, 31060 Toulouse Cedex 9 (FR)
(74) Mandataire: Airbus-OPS SAS

(56) Documents cités:
- FR-A1- 2 749 656
- US-A1- 2009 092 173
- US-A1- 2021 181 038

## Description

La présente invention concerne un dispositif de mesure susceptible d'être accolé sur une paroi extérieure d'un objet mobile ou d'un objet fixe se trouvant dans un écoulement de fluide pour mesurer des grandeurs physiques. Plus particulièrement, la présente invention s'applique à la mesure de paramètres utilisés pour caractériser un écoulement d'air à la surface d'un aéronef.

Lors d'essais en vol, des capteurs sont montés sur la surface extérieure d'un aéronef pour effectuer différents types de mesure. L'étude des résultats permet de comprendre le comportement d'un aéronef en vol et d'en améliorer ou valider les performances. Selon une application particulière, il est possible par exemple de détecter et localiser des phénomènes aérodynamiques sur l'aéronef.

La demande de brevet EP4067827 décrit un dispositif de mesure d'une grandeur physique telle qu'une température, destiné à être accolé sur une paroi d'un objet mobile ou d'un objet fixe dans un écoulement que l'on souhaite caractériser à l'aide de la grandeur physique mesurée. Le dispositif comprend un support présentant une face destinée à venir en contact avec ladite paroi et une face opposée dite libre se trouvant dans ledit écoulement. Le support comprend des logements dans lesquels sont logés des capteurs, les logements étant pourvus d'une ouverture débouchant dans une cavité dans laquelle se trouve un circuit imprimé flexible du côté de la face libre. Le circuit est disposé à l'envers dans ladite cavité, les capteurs fixés au circuit se trouvant en suspension dans les logements. Les capteurs permettent ainsi de mesurer la température du flux d'air qui s'écoule le long de la paroi sur laquelle est fixée le dispositif de mesure. Un autre example est décrit par le document US 2021/181038 A1.

Lorsque le support est appliqué sur une paroi de moteur, la température peut être très élevée et perturber la mesure de la température du flux s'écoulant le long de la paroi par le capteur en suspension au-dessus de ladite paroi.

La présente invention vise à proposer une nouvelle architecture de dispositif de mesure de température d'un écoulement permettant de pallier à cet inconvénient.

A cet effet, la présente invention concerne un dispositif de mesure de la température d'un fluide s'écoulant sur une paroi extérieure d'un objet comprenant une fibre optique et une enveloppe souple entourant ladite fibre optique, ladite fibre optique s'étendant selon un axe longitudinal X, caractérisé en ce que le dispositif de mesure comprend une pièce isolante allongée comprenant du liège et présentant au moins deux faces opposées, une face intérieure et une face extérieure, et caractérisé en ce que l'enveloppe entoure ladite pièce isolante à l'exception de la face extérieure, et maintient la face intérieure de la pièce isolante en vis-à-vis de la fibre optique sur au moins une partie de sa longueur le long de l'axe longitudinal X, la face intérieure de la pièce isolante présentant une dimension transversale supérieure au moins au diamètre de la fibre.

L'invention prévoit au moins l'une des caractéristiques optionnelles suivantes, prises isolément ou en combinaison.

Les faces intérieure et extérieure de la pièce isolante sont revêtues au moins partiellement d'une couche d'élastomère de silicone, la pièce isolante étant alors appelée pièce isolante à joints.

La fibre est revêtue d'une gaine et appelée fibre gainée, l'enveloppe entourant la fibre gainée et la pièce isolante à joints à l'exception de la face extérieure revêtue au moins partiellement d'élastomère de silicone.

La fibre gainée est en contact avec la pièce isolante à joints sur toute la longueur de la pièce isolante.

L'enveloppe présente une forme de polyèdre à six faces comprenant au moins deux faces parallèles planes dont l'une à cavité débouchante de forme complémentaire à la pièce isolante à joints.

L'épaisseur de l'enveloppe entre les deux faces parallèles planes au niveau de la fibre gainée correspond sensiblement au diamètre de la fibre gainée, voire légèrement supérieure.

La pièce isolante est une plaque de liège naturel ou expansé.

L'enveloppe présente une section trapézoïdale, l'enveloppe, la pièce isolante à joints et la fibre gainée présentant une forme symétrique par rapport à un plan P passant par l'axe longitudinal X, la fibre gainée étant positionnée sur la pièce isolante à joints au niveau dudit plan.

L'invention se rapporte également à une structure comprenant une paroi munie d'un dispositif de mesure présentant au moins l'une ou plusieurs des caractéristiques précédentes ainsi qu'à l'aéronef comprenant une telle structure.

D'autres buts, caractéristiques et avantages ressortiront de la description de l'invention qui va suivre, description donnée à titre d'exemple uniquement non limitatif, en référence aux dessins ci-annexés dans lesquels : [Fig. 1] est une vue schématique en perspective d'un aéronef susceptible d'être pourvu du dispositif de mesure selon la présente invention ; [Fig. 2] est une vue schématique en perspective d'un ensemble propulsif d'aéronef pourvu d'un dispositif de mesure selon la présente invention ; [Fig. 3] est une vue en coupe de côté d'un dispositif de mesure accolé à une paroi d'un objet selon la présente invention.

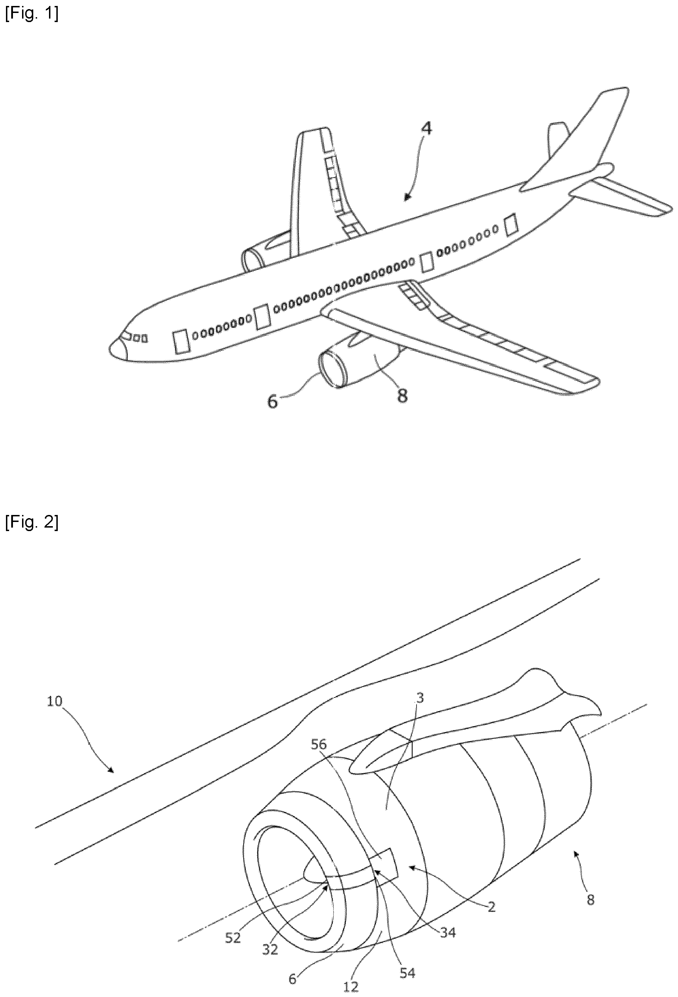

Le dispositif 2 de mesure selon la présente invention équipe une structure 3 et selon une application illustrée sur les figures 1 à 3, une structure 3 déterminée d'un aéronef 4 à savoir plus particulièrement une nacelle 6 d'un groupe 8 propulseur dans le cadre d'essais en vol. La présente invention concerne un dispositif 2 de mesure de température d'un flux d'air 10 s'écoulant le long de la paroi 12 extérieure de la nacelle 6 et schématisé par les deux lignes de flux illustrées sur la figure 2. Toute autre application du dispositif sur une paroi 12 extérieure d'un objet mobile tel que l'aéronef 4 ou d'un objet fixe se trouvant dans un écoulement de fluide pour mesurer sa température est envisageable.

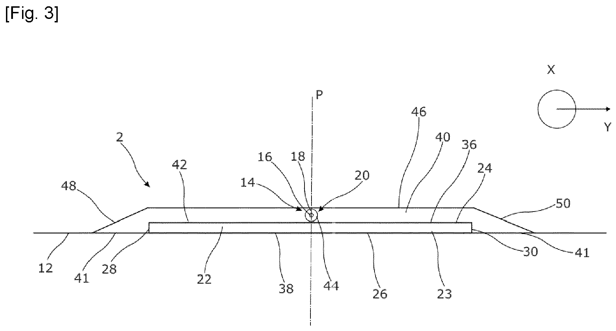

Comme représenté sur la figure 3, le dispositif 2 de mesure comprend un capteur 14 destiné à mesurer la température du flux 10. Pour permettre de mesurer la température du flux 10, il est nécessaire de fixer le capteur 14 à la paroi 12 de la nacelle 6. Le capteur est une fibre 16 optique dont le fonctionnement est de type connu et ne sera pas décrit plus en détail. La fibre optique a pour avantage de résister aux températures importantes inhérentes aux nacelles 6 ainsi que d'être souple pour épouser les contours de celles-ci. Elle présente également pour avantage d'être peu encombrante et légère. Elle permet par sa longueur possible de s'appliquer à des objets de grande dimension comme la nacelle. Elle offre une grande rapidité et une haute précision de mesure. La fibre optique est susceptible de mesurer des grandeurs physiques telles que la température du flux d'air s'écoulant le long de la paroi de l'objet sur laquelle elle est accolée, à savoir dans l'application retenue la température du flux s'écoulant le long de la paroi 12 extérieure de la nacelle. Elle offre la possibilité d'une multiplicité de mesures sur toute ou partie de sa longueur. La fibre 16 est revêtue d'une gaine 18 flexible par exemple en polytétrafluoroéthylène encore appelé PTFE offrant une résistance aux hautes températures. La gaine 18 entoure complètement la fibre 16 et présente la forme d'un manchon. La fibre 16 revêtue de la gaine 18 sera désignée dans la suite de la description fibre gainée 20. La gaine 18 pourrait être faite de tout autre type de matériau convenant à l'environnement comme par exemple du polyétheréthercétone encore appelé PEEK, du polyamide renforcé en fibres de verre ou encore du métal. La fibre gainée s'étend selon un axe longitudinal X.

La fibre gainée 20 est placée dans le flux 10 d'air et elle est isolée des fortes températures que dégage la paroi 12 de la nacelle par l'intermédiaire d'une pièce isolante 22 comprenant du liège. Ladite pièce 22 isolante présente une forme allongée s'étendant le long de la fibre gainée 20 entre celle-ci et la paroi 12 de l'objet ici la nacelle. La pièce isolante 22 comprend au moins deux faces 24, 26 opposées, une face dite intérieure 24 se trouvant du côté de la fibre gainée, l'autre face dite extérieure 26 se trouvant du côté opposé. La pièce isolante est maintenue en vis-à-vis de la fibre optique sur au moins une partie de la longueur de la fibre et dans la forme illustrée sur toute sa longueur. La face intérieure 24 de la pièce isolante 22 présente une dimension transversale, à savoir perpendiculaire à l'axe longitudinal X, supérieure au moins au diamètre de la fibre et dans la forme illustrée supérieure au diamètre de la fibre gainée sur toute la longueur selon l'axe X de celle-ci. Le liège est un très bon isolant thermique qui a l'avantage supplémentaire d'être léger, facile à manipuler, de permettre une fixation robuste au vu de l'environnement du dispositif de mesure lorsque l'aéronef est en vol. Plus précisément, le matériau peut être du liège naturel, du liège expansé, ou encore par exemple une combinaison de liège et d'un autre matériau apportant des avantages techniques additionnels. Il peut s'agir par exemple de caoutchouc : le caoutchouc ajoute une imperméabilité et permet au dispositif de mesure d'épouser encore un peu plus la forme de la paroi contre laquelle il est appliqué. Dans la forme illustrée, la pièce isolante 22 est entièrement faite de liège, naturel ou expansé.

Dans la forme illustrée sur la figure 3, la pièce isolante 22 comprenant du liège se présente sous la forme d'une plaque : elle présente une forme parallélépipédique de section rectangulaire présentant six faces mais toute autre forme est possible tant qu'elle permet de s'insérer entre la fibre gainée 20 et la paroi 12 de l'objet ici la nacelle de l'aéronef et d'isoler ainsi thermiquement la fibre de la paroi 12. La longueur de la pièce 22 est de préférence égale ou supérieure à la longueur de la fibre. L'épaisseur et la largeur de la pièce 22 sont déterminées de manière à assurer une isolation suffisante tout en offrant un encombrement réduit et dépendent de l'environnement et des matériaux utilisés. La largeur de la pièce 22 sous forme de plaque est supérieure au diamètre de la fibre gainée. Dans l'exemple illustré, la pièce isolante 22 présente deux faces longitudinales parallèles, l'une d'elle la face dite intérieure 24 étant celle sur laquelle la fibre repose au niveau d'un axe longitudinal central X, l'autre dite face extérieure 26 étant la face longitudinale parallèle opposée à celle-ci. Les faces longitudinales 28, 30 de liaison des faces intérieure et extérieure sont appelées faces longitudinales latérales. Les faces transversales 32, 34 de la pièce 22 non visibles sur la figure 2 mais dont le positionnement est indiqué par des flèches sont les deux dernières faces des six faces de la plaque 22. Elles sont parallèles entre elles mais pourraient ne pas l'être.

Comme illustré sur la figure 3, des couches 36, 38 de joint sont appliquées au moins partiellement sur au moins deux faces respectivement 24, 26 de la pièce isolante 22, dont l'une destinée à la fixation avec la paroi 12. Dans l'exemple illustré, la pièce isolante 22 est prise en sandwich entre deux couches 36, 38 de joint. Les couches 36, 38 de joint peuvent être faites d'élastomère de silicone par exemple de type RTV 106 (en anglais Room Temperature Vulcanization). La couche 38 de joint permet d'améliorer la fixation de la pièce 22 isolante contenant du liège sur la paroi 12. L'utilisation d'un élastomère de silicone RTV permet également de résister à de fortes températures tout en permettant de manière additionnelle d'isoler la fibre gainée contre les vibrations. Chaque couche 36, 38 est appliquée sur une partie ou la totalité de la surface des faces 24, 26 longitudinales intérieure et extérieure de la pièce 22 isolante. Dans la forme de réalisation décrite en exemple, chaque couche 36, 38 revêt entièrement les faces respectivement 24, 26 de la pièce 22. La pièce isolante 22 revêtue des couches 36, 38 de joint sera ci-après appelée pièce isolante à joints 23.

La fibre gainée 20 est positionnée sur et le long de la pièce isolante à joints 23. La fibre gainée 20 et la pièce isolante 23 à joints, à l'exception de sa face 26 revêtue de la couche 38 destinée à être fixée à la paroi 12, sont enveloppées d'une enveloppe 40. L'enveloppe 40 permet de les maintenir l'une contre l'autre. Dans la forme illustrée, l'enveloppe maintient la face intérieure 24 de la pièce isolante en vis-à-vis de la fibre sur toute sa longueur le long de l'axe longitudinal X, la fibre gainée étant en contact avec la pièce isolante sur au moins une partie et dans la forme illustrée sur toute la longueur de la pièce isolante. Selon une autre forme possible, la fibre gainée pourrait être séparée de la pièce isolante à joints par l'enveloppe. La face 26 laissée libre permet par l'intermédiaire de la couche 38 de joint comme vu précédemment d'améliorer la fixation sur la paroi 12 de la nacelle. De préférence, l'épaisseur de l'enveloppe 40 au niveau de la fibre gainée est telle que la fibre gainée soit au plus proche du flux d'air 10 de manière à en mesurer le plus précisément la température tout en étant maintenue par l'enveloppe 40. Ainsi comme le montre la figure 3, dans la forme de réalisation illustrée, au niveau de la coupe transversale et du plan P de symétrie longitudinal central de la fibre gainée et de l'enveloppe, l'épaisseur de l'enveloppe 40 correspond sensiblement à l'épaisseur de la fibre gainée voire légèrement supérieure pour assurer une continuité de surface de l'enveloppe. Par ailleurs la couche 36 sur la face 24 intérieure de la pièce isolante 22 permet de faciliter la fixation de la pièce isolante à joints 23 sur l'enveloppe 40. La couche 38 et l'enveloppe 40 au niveau de sa face 41 destinée à être accolée à la paroi 12 présentent des surfaces affleurantes formant une seule et même surface destinée à être accolée à la paroi de la nacelle.

La principale fonction de l'enveloppe 40 est d'offrir un carénage au capteur 14, qui est dans l'exemple illustré, la fibre gainée 20 ainsi qu'à la pièce isolante 23 à joints pour les protéger contre tout type d'agressions extérieures (chocs d'objets, d'oiseaux ou autres contre l'entrée d'air, intempéries ou tout autre type d'agressions). La fibre gainée 20 et la pièce isolante 23 à joints sont noyées dans l'enveloppe 40 (à l'exception de la couche 38 comme vu plus haut). Dans l'exemple décrit, la fibre gainée 20 est en contact avec la pièce isolante 23 à joints mais elles pourraient être séparées par l'enveloppe, noyées toutes les deux à l'intérieur. L'enveloppe 40 souple peut être réalisée en matériau polymère par exemple en polyuréthane ou silicone ou composé de tout autre matériau suffisamment souple pour épouser les contours de la paroi 12 et permettant de protéger la fibre gainée et de résister aux hautes températures du milieu. Elle peut être réalisée par moulage, usinage ou tout autre procédé de fabrication connu.

L'enveloppe 40 souple peut être réalisée en matériau polymère par exemple en polyuréthane ou silicone ou composé de tout autre matériau suffisamment souple pour épouser les contours de l'aéronef et permettant de protéger la fibre gainée et de résister aux hautes températures du milieu. Elle peut être réalisée par moulage, usinage ou tout autre procédé de fabrication connu.

Dans la forme de réalisation illustrée sur la figure 3, l'enveloppe 40 présente une forme globale extérieure de polyèdre à 6 faces présentant deux cavités 42, 44, une cavité 42 débouchante de forme complémentaire à la pièce 23 isolante à joints et une cavité 44 de forme complémentaire à la fibre gainée. Les 6 faces de l'enveloppe sont les suivantes : - la face 41 destinée à venir en contact avec la paroi 12 de la nacelle affleurant avec la surface de la couche 38 destinée à venir en contact avec la paroi 12 (comme vu précédemment), la cavité 42 de forme complémentaire à la pièce 23 isolante à joints débouchant dans ladite face 41. Ainsi la pièce 23 à l'intérieur de la cavité 42 est intégrée à l'enveloppe 40. Elle se trouve enveloppée à l'exception de sa face 26 revêtue de la couche 38 formant avec la face 41 de l'enveloppe une seule et même surface permettant la fixation à la paroi 12 ; - une deuxième face 46 libre, parallèle et opposée à la première face 41 ; - deux faces 48, 50 formant les bords latéraux longitudinaux de l'enveloppe. Les bords latéraux de l'enveloppe présentent une épaisseur décroissante s'effilant vers la périphérie permettant d'offrir une surface perturbante très faiblement l'écoulement aérodynamique ; - deux faces 52, 54 (visibles sur la figure 2), formant les extrémités transversales de l'enveloppe, l'une d'entre elle 54 étant destinée à se connecter à une unité 56 de gestion des données mesurées, l'autre 52 correspondant à l'extrémité transversale libre de l'enveloppe. Le profil de la section de l'enveloppe illustrée sur la figure 3 est trapézoïdal. L'enveloppe, la pièce isolante à joints et la fibre gainée présentant une forme symétrique par rapport à un plan P passant par l'axe longitudinal X, la fibre gainée étant positionnée sur la pièce isolante à joints au niveau dudit plan. Comme indiqué plus haut, l'enveloppe 40 peut présenter tout type de forme : ainsi, la face 52 transversale libre formant l'une des extrémités longitudinales de l'enveloppe peut présenter une épaisseur décroissante s'effilant vers le côté longitudinal opposé à l'unité 56 permettant d'offrir de la même façon que les deux faces 48, 50 de l'enveloppe une surface perturbant le plus faiblement possible l'écoulement aérodynamique. La face 52 est alors dans ce cas inclinée et non perpendiculaire aux faces 41 et 46.

## Revendications

1. Dispositif de mesure de la température d'un fluide s'écoulant sur une paroi (12) extérieure d'un objet (4, 6) comprenant une fibre optique (16) et une enveloppe (40) souple entourant ladite fibre optique, ladite fibre optique s'étendant selon un axe longitudinal X, **caractérisé en ce que** le dispositif de mesure (2) comprend une pièce isolante (22) allongée comprenant du liège et présentant au moins deux faces (24, 26) opposées, une face intérieure (24) et une face extérieure (26), et **caractérisé en ce que** l'enveloppe (40) entoure ladite pièce isolante (22) à l'exception de la face (26) extérieure, et maintient la face intérieure (24) de la pièce isolante en vis-à-vis de la fibre optique sur au moins une partie de sa longueur le long de l'axe longitudinal X, la face intérieure de la pièce isolante présentant une dimension transversale supérieure au moins au diamètre de la fibre.

2. Dispositif de mesure selon la revendication 1, **caractérisé en ce que** les faces intérieure (24) et extérieure (26) de la pièce isolante (22) sont revêtues au moins partiellement d'une couche respectivement (36, 38) d'élastomère de silicone, la pièce isolante (22) étant alors appelée pièce isolante à joints (23).

3. Dispositif de mesure selon la revendication 2, **caractérisé en ce que** la fibre (16) est revêtue d'une gaine (18) et appelée fibre gainée (20), l'enveloppe (40) entourant la fibre gainée (20) et la pièce isolante à joints (23) à l'exception de la face extérieure (26) revêtue au moins partiellement d'élastomère de silicone.

4. Dispositif de mesure selon la revendication 3, **caractérisé en ce que** la fibre gainée (20) est en contact avec la pièce isolante à joints (23) sur toute la longueur de la pièce isolante à joints.

5. Dispositif de mesure selon l'une des revendications 2 à 4, **caractérisé en ce que** l'enveloppe (40) présente une forme de polyèdre à six faces comprenant au moins deux faces (41, 46) parallèles planes dont l'une (41) à cavité (42) débouchante de forme complémentaire à la pièce isolante à joints (23).

6. Dispositif de mesure selon les revendications 3 et 5, **caractérisé en ce que** l'épaisseur de l'enveloppe (40) entre les deux faces (41, 46) au niveau de la fibre gainée (20) correspond sensiblement au diamètre de la fibre gainée, voire légèrement supérieure.

7. Dispositif selon l'une des revendications 1 à 6, **caractérisé en ce que** la pièce isolante (22) est une plaque de liège naturel ou expansé.

8. Dispositif selon les revendications 3 et 5, **caractérisé en ce que** l'enveloppe (40) présente une section trapézoïdale, l'enveloppe, la pièce isolante à joints et la fibre gainée présentant une forme symétrique par rapport à un plan P passant par l'axe longitudinal X, la fibre gainée étant positionnée sur la pièce isolante à joints au niveau dudit plan.

9. Structure présentant une paroi (12) munie d'un dispositif de mesure selon l'une des revendications 1 à 8.

10. Aéronef **caractérisé en ce qu'**il comprend une structure (3) selon la revendication 9.

## Patentansprüche

1. Messvorrichtung zum Messen der Temperatur eines Mediums, das an einer Außenwand (12) eines Objekts (4, 6) strömt, umfassend eine Glasfaser (16) und eine die Glasfaser umgebende flexible Hülle (40), wobei sich die Glasfaser entlang einer Längsachse X erstreckt, **dadurch gekennzeichnet, dass** die Messvorrichtung (2) ein längliches isolierendes Teil (22) umfasst, das Kork umfasst und mindestens zwei entgegengesetzte Flächen (24, 26), eine innere Fläche (24) und eine äußere Fläche (26), aufweist, und **dadurch gekennzeichnet, dass** die Hülle (40) das isolierende Teil (22) mit Ausnahme der äußeren Fläche (26) umgibt und die innere Fläche (24) des isolierenden Teils gegenüber der Glasfaser über mindestens einen Teil ihrer Länge entlang der Längsachse X hält, wobei die innere Fläche des isolierenden Teils ein Quermaß aufweist, das größer als mindestens der Durchmesser der Faser ist.

2. Messvorrichtung nach Anspruch 1, **dadurch gekennzeichnet, dass** die innere Fläche (24) und die äußere Fläche (26) des isolierenden Teils (22) mindestens teilweise mit einer jeweiligen Schicht (36, 38) aus Silikonelastomer überzogen sind, wobei das isolierende Teil (22) dann als isolierendes Teil mit Dichtungen (23) bezeichnet wird.

3. Messvorrichtung nach Anspruch 2, **dadurch gekennzeichnet, dass** die Faser (16) mit einem Mantel (18) überzogen ist und als ummantelte Faser (20) bezeichnet wird, wobei die Hülle (40) die ummantelte Faser (20) und das isolierende Teil mit Dichtungen (23) mit Ausnahme der mindestens teilweise mit Silikonelastomer überzogenen äußeren Fläche (26) umgibt.

4. Messvorrichtung nach Anspruch 3, **dadurch gekennzeichnet, dass** die ummantelte Faser (20) mit dem isolierenden Teil mit Dichtungen (23) über die gesamte Länge des isolierenden Teils mit Dichtungen in Kontakt ist.

5. Messvorrichtung nach einem der Ansprüche 2 bis 4, **dadurch gekennzeichnet, dass** die Hülle (40) die Form eines Polyeders mit sechs Flächen a aufweist, das mindestens zwei plane parallele Flächen (41, 46) umfasst, darunter eine (41) mit offenem Hohlraum (42) mit zum isolierenden Teil mit Dichtungen (23) komplementärer Form.

6. Messvorrichtung nach den Ansprüchen 3 und 5, **dadurch gekennzeichnet, dass** die Dicke der Hülle (40) zwischen den beiden Flächen (41, 46) an der ummantelten Faser (20) im Wesentlichen dem Durchmesser der ummantelten Faser entspricht oder sogar geringfügig größer ist.

7. Vorrichtung nach einem der Ansprüche 1 bis 6, **dadurch gekennzeichnet, dass** das isolierende Teil (22) eine Platte aus natürlichem oder expandiertem Kork ist.

8. Vorrichtung nach den Ansprüchen 3 und 5, **dadurch gekennzeichnet, dass** die Hülle (40) einen trapezförmigen Querschnitt aufweist, wobei die Hülle, das isolierende Teil mit Dichtungen und die ummantelte Faser eine Form aufweisen, die in Bezug auf eine durch die Längsachse X verlaufende Ebene P symmetrisch ist, wobei die ummantelte Faser auf dem isolierenden Teil mit Dichtungen an der Ebene angeordnet ist.

9. Struktur, die eine Wand (12) aufweist, die mit einer Messvorrichtung nach einem der Ansprüche 1 bis 8 versehen ist.

10. Luftfahrzeug, **dadurch gekennzeichnet, dass** es eine Struktur (3) nach Anspruch 9 umfasst.

## Claims

1. Device for measuring the temperature of a fluid flowing over an outer wall (12) of an object (4, 6) comprising an optical fibre (16) and a flexible jacket (40) surrounding said optical fibre, said optical fibre extending along a longitudinal axis X, **characterized in that** the measuring device (2) comprises an elongate insulating part (22) comprising cork and having at least two opposite faces (24, 26), an inner face (24) and an outer face (26), and **characterized in that** the jacket (40) surrounds said insulating part (22), apart from the outer face (26), and keeps the inner face (24) of the insulating part facing the optical fibre over at least a part of its length along the longitudinal axis X, the inner face of the insulating part having a transverse dimension greater at least than the diameter of the fibre.

2. Measuring device according to Claim 1, **characterized in that** the inner (24) and outer (26) faces of the insulating part (22) are coated at least partially with a layer, respectively (36, 38), of silicone elastomer, the insulating part (22) then being called insulating part with seals (23).

3. Measuring device according to Claim 2, **characterized in that** the fibre (16) is coated with a sheath (18) and called sheathed fibre (20), the jacket (40) surrounding the sheathed fibre (20) and the insulating part with seals (23), apart from the outer face (26) coated at least partially with silicone elastomer.

4. Measuring device according to Claim 3, **characterized in that** the sheathed fibre (20) is in contact with the insulating part with seals (23) over the entire length of the insulating part with seals.

5. Measuring device according to one of Claims 2 to 4, **characterized in that** the jacket (40) has a polyhedral form with six faces comprising at least two flat parallel faces (41, 46), including one (41) with an open cavity (42) of a form complementing the insulating part with seals (23).

6. Measuring device according to Claims 3 and 5, **characterized in that** the thickness of the jacket (40) between the two faces (41, 46) at the sheathed fibre (20) corresponds substantially to the diameter of the sheathed fibre, or is even slightly greater.

7. Device according to one of Claims 1 to 6, **characterized in that** the insulating part (22) is a sheet of natural or expanded cork.

8. Device according to Claims 3 and 5, **characterized in that** the jacket (40) has a trapezoidal section, the jacket, the insulating part with seals and the sheathed fibre having a form that is symmetrical with respect to a plane P passing through the longitudinal axis X, the sheathed fibre being positioned on the insulating part with seals at said plane.

9. Structure having a wall (12) provided with a measuring device according to one of Claims 1 to 8.

10. Aircraft, **characterized in that** it comprises a structure (3) according to Claim 9.
